# EUROPEAN PATENT SPECIFICATION

(11) **EP 0 881 116 B1**
(45) Date of publication and mention of the grant of the patent: **02.05.2002**
(21) Application number: 97830746.0
(22) Date of filing: 31.12.1997
(51) Int. Cl.: B60N 2/44

(54) **Motor-vehicle seat frame**
Rahmen für Kraftfahrzeugsitz
Cadre de siège de véhicule automobile

(30) Priority: 28.05.1997 IT TO970459
(43) Date of publication of application: 02.12.1998
(73) Proprietor: LEAR CORPORATION ITALIA S.p.A., 10128 Torino (IT)
(72) Inventor: Bouhours, Daniel, 10095 Grugliasco (Torino) (IT)
(74) Representative: Notaro, Giancarlo

(56) References cited:
- EP-A- 0 783 990
- WO-A-86/00118
- WO-A-97/04689
- FR-A- 2 456 242
- US-A- 1 411 184
- US-A- 2 257 538

## Description

The present invention relates to motor-vehicle seats, of the type comprising a frame made of magnesium alloy and a steel plate secured by means of screws, rivets or the like to the magnesium frame. In the following description and claims, the term "screws" must be understood as including any other equivalent coupling means, such as rivets.

Seats of the above indicated type are becoming of increasing use in the automotive industry, where the need of reducing the weight of the whole structure of the motor-vehicle is more and more felt. Typically, the seats of the above indicated type comprise a cushion frame and a backrest frame, both made of magnesium alloy, having sides on which two pairs of steel plates are secured, these plates being pivotally connected to each other around an axis which is transverse relative to the longitudinal direction of the motor-vehicle, by means of a conventional backrest adjustment device.

Tests conducted by the Applicant on seats of the above indicated type have shown a tendency to formation of cracks and ruptures which spread starting from the surface of the holes formed in the frame of magnesium alloy which are engaged by the screws for securing the steel plate. Studies conducted by the Applicant have brought to find that these ruptures are due to that the loads transmitted between the steel plate and the frame of magnesium alloy are concentrated in limited areas and therefore subject the magnesium structure to an excessive stress.

In order to solve this drawback, the present invention provides a seat of the type indicated at the beginning, characterized in that the magnesium frame and the steel plate are in contact with each other only at an area where said screws or the like are mounted, where they have rounded mating contact surfaces, the magnesium frame having holes for engagement of the screws or the like within which the screws or the like are arranged with clearance.

Due to this feature, and particularly due to the provision of rounded mating contact surfaces, the loads transmitted between the steel plate and the magnesium frame are distributed over a relatively wide surface. Furthermore, the fact that the screws engage the holes formed in the magnesium frame with clearance avoids that the screws apply a shear stress to the wall of said holes, thus nullifying the risk of ruptures. Therefore, the clamping of the steel plate onto the magnesium frame is only due to the friction caused by the pressure which is exchanged between the mating contact surfaces due to the strain of the screws, which are tightened by means of cooperating nuts.

Furthermore, the head of each screw and the cooperating nut are supported against the frame of magnesium alloy and the steel plate with the interposition of respective plates which further contribute to distribute the force generated by the screw strain on a wide surface.

The invention will be now described with reference to the annexed drawings, given purely by way of non limiting example, in which:

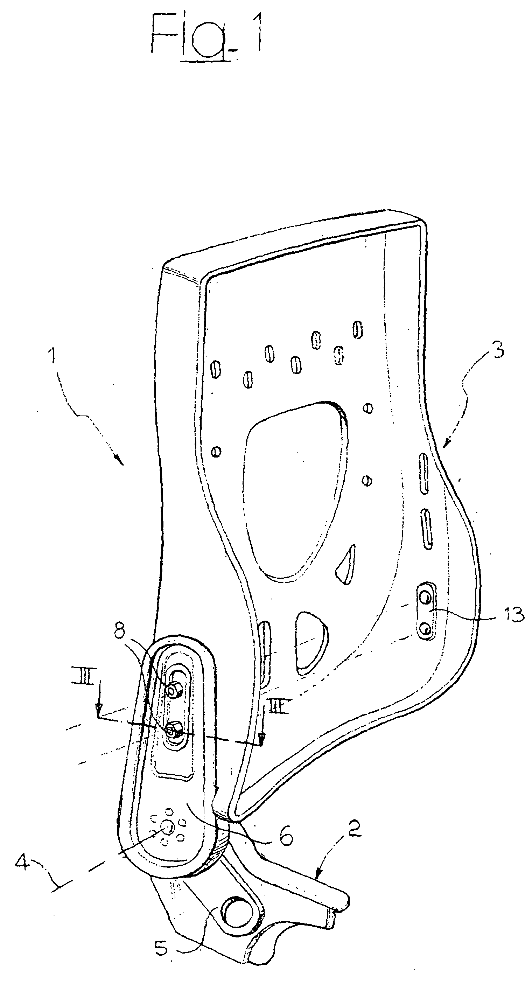

figure **1** is a partial perspective view of a frame of a seat according to the invention,
figure **2** is an exploded perspective view of the detail of figure 1, and
figure **3** is a cross-sectional view taken along line III-III of figure 2.

With reference to the drawings, numeral 1 generally designates the frame of a motor-vehicle seat, comprising a backrest frame 3 and a cushion frame (not shown, since it is similar to frame 3), both made of magnesium alloy. The frames are mutually articulated with each other around an axis 4 which is transverse relative to the longitudinal direction of the motor-vehicle (with reference to the mounted condition of the seat thereon) by means of a conventional device for adjustment of the backrest (not shown) which can be of any known type. The backrest adjustment device pivotally connects each of two pairs (only one of which is shown in the drawing) of steel plates 5, 6 which are respectively fixed to the sides of the cushion frame and the backrest frame 3.

In the present description, specific reference will be made to the connection of the two plates 6 to the two sides of the backrest frame 3, while it is clearly understood that this description may be equally adapted to the case of the connection of the two steel plates 5 to the two sides of the cushion frame.

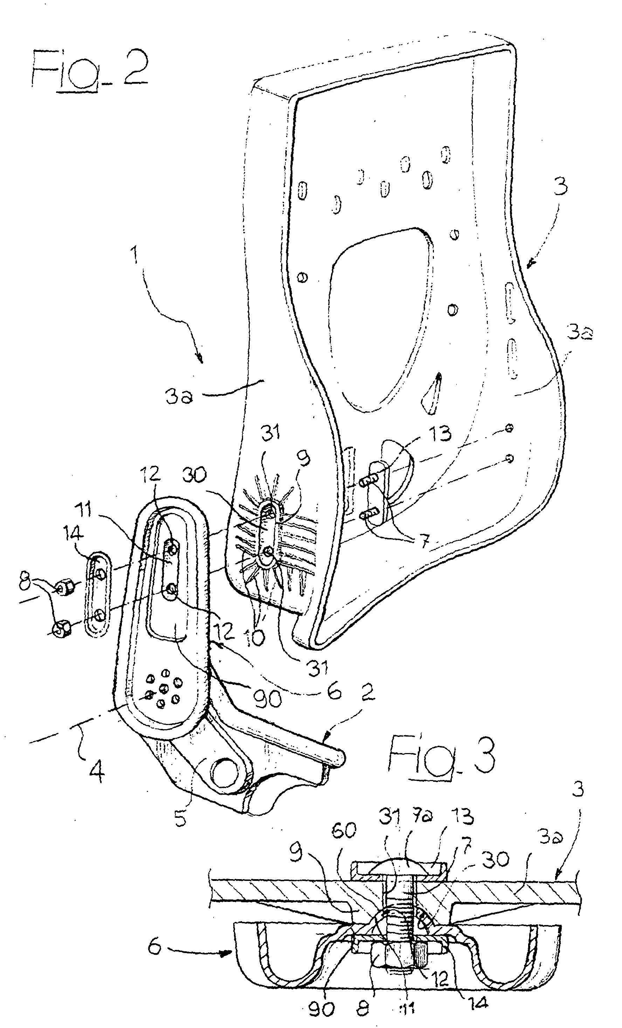

With reference to figures 2, 3, each plate 6 is secured to the respective side wall 3a of the frame 3 made of magnesium alloy by means of a pair of screws 7 tightened by means of nuts 8. The plate 6 and the respective side wall 3a of frame 3 are in contact with each other substantially only at an area where screws 7 are applied, where they have rounded mating contact surfaces 30, 60. More precisely, the contact surface 30 of the magnesium frame 3 is formed by a vertically elongated cavity, with a semicircular profile, which is surrounded by a projecting bead 9 which is further strengthened by radial ribs 10 projecting from the outer surface of the side 3a of frame 3. On the bottom of cavity 30 there are formed two holes 31 for engagement of the two screws 7.

Similarly, the steel plate 6 has a flat area 90 which is supported against bead 9 of side 3a and has a pressed out portion 11 at its central area whose surface facing the side 3a defines the above mentioned contact surface 60 having a shape mating that of surface 30 of frame 3. At the pressed out portion 11 there are provided two holes 12 for passage of screws 7.

As clearly shown in figure 3, each screw 7 engages the respective hole 31 of frame 3, as well as the hole 12 of plate 6 with clearance. Furthermore, the head 7a of each screw 7 and the cooperating nut 8 are supported against frame 3 and plate 6 with the interposition of plates 13, 14 which further contribute to distribute the force generated by the strain of screws 7 on a wide surface.

As already indicated in the foregoing, the provision of rounded mating contact surfaces 30, 60, the provision of clearance between the screws and the walls of holes 31, as well as the provision of strengthening ribs 10 in the magnesium frame prevent formation of cracks or ruptures in this frame due to the forces transmitted by the steel plate 6 at the areas where holes 31 tend to generate a notch effect.

Obviously, as indicated already above, the foregoing description may be also applied to the connection of steel plates 5 to the magnesium cushion frame.

Naturally, also, while the principle of the invention remains the same, the details of construction and the embodiments may widely vary with respect to what has been described and shown, without departing from the scope of the present invention, provided the invention remains defined by the claims.

## Claims

1. Motor-vehicle seat, comprising a frame (3) made of magnesium alloy and a steel plate (6) secured to the magnesium frame (3) by means of screws (7), rivets or the like,
**characterized in that** the magnesium frame (3) and the steel plate (6) are in contact with each other substantially only at an area where said screws (7) or the like are applied, where they have rounded mating contact surfaces (30, 60), the magnesium frame having holes (31) for engagement of the screws (7) or the like, within which the screws (7) or the like are arranged with clearance.

2. Seat according to claim 1, **characterized in that** said frame is the frame (3) of the backrest and said plate (6) is provided on a respective side thereof for articulated connection to a cushion frame (2).

3. Seat according to claim 1, **characterized in that** said frame is the cushion frame (2) and said plate (5) is provided on a respective side thereof for articulated connection to a backrest frame (3).

4. Seat according to claim 1, wherein each securing screw (7) is tightened by means of a cooperating nut (8), **characterized in that** the head (7a) of each screw (7) and the respective nut (8) are supported against said magnesium frame (3) and said steel plate (7) with the interposition of force distributing plates (13, 14).

5. Seat according to claim 1, **characterized in that** the contact surface provided on the magnesium frame (3) is defined by an elongated cavity (30) having a semi-circular profile, which is surrounded by a projecting bead (9) from which strengthening ribs (10) extend radially, said projecting bead (9) and said ribs (10) being formed in one piece with the magnesium frame (3).

6. Seat according to claim 5, **characterized in that** the contact surface (60) of the steel plate (6) is defined by a pressed out portion (11) of said plate (6) having a shape mating that of said cavity (30) formed in the magnesium frame (3), said pressed out portion (11) being formed at the center of the flat area (9) of the steel plate (6) which is supported against said projecting bead (9) of the magnesium frame (3) which runs along the periphery of said cavity (30).

## Patentansprüche

1. Kraftfahrzeugsitz, der einen Rahmen (3), der aus Magnesiumlegierung besteht, und eine Stahlplatte (6) umfasst, die an dem Magnesiumrahmen (3) mit Schrauben (7), Nieten oder dergleichen befestigt ist,
**dadurch gekennzeichnet, dass** der Magnesiumrahmen (3) und die Stahlplatte (6) im Wesentlichen nur in einem Bereich miteinander in Kontakt sind, in dem Schrauben (7) oder dergleichen angebracht sind, wo sie abgerundete, aneinanderpassende Kontaktflächen (30, 60) aufweisen, wobei der Magnesiumrahmen Löcher (31) aufweist, die mit den Schrauben (7) oder dergleichen in Eingriff kommen und in denen die Schrauben (7) oder dergleichen mit Spielraum angeordnet sind.

2. Sitz nach Anspruch 1, **dadurch gekennzeichnet, dass** der Rahmen der Rahmen (3) der Rückenlehne ist und die Platte (6) an einer entsprechenden Seite desselben zur gelenkigen Verbindung mit einem Sitzpolsterrahmen (2) vorhanden ist.

3. Sitz nach Anspruch 1, **dadurch gekennzeichnet, dass** der Rahmen der Sitzpolsterrahmen (2) ist und die Platte (5) an einer entsprechenden Seite desselben zur gelenkigen Verbindung mit einem Rückenlehnenrahmen (3) vorhanden ist.

4. Sitz nach Anspruch 1, wobei jede Befestigungsschraube (7) mittels einer damit zusammenwirkenden Mutter (8) festgezogen wird, **dadurch gekennzeichnet, dass** der Kopf (7a) jeder Schraube (7) und die entsprechende Mutter (8) auf dem Magnesiumrahmen (3) und der Stahlplatte (7) aufliegen, wobei sich Kraftverteilungsplatten (13, 14) dazwischen befinden.

5. Sitz nach Anspruch 1, **dadurch gekennzeichnet, dass** die Kontaktfläche, die an dem Magnesiumrahmen (3) vorhanden ist, durch einen länglichen Hohlraum (3) mit einem halbkreisförmigen Profil gebildet wird, der von einer vorstehenden Wulst (9) umgeben ist, von der aus sich Verstärkungsrippen (10) radial erstrecken, wobei die vorstehende Wulst (9) und die Rippen (10) aus einem Stück mit den Magnesiumrahmen (3) bestehen.

6. Sitz nach Anspruch 5, **dadurch gekennzeichnet, dass** die Kontaktfläche (16) der Stahlplatte (6) durch einen ausgepressten Abschnitt (11) der Platte (6) gebildet wird, der eine Form hat, die zu der des Hohlraums (30) passt, der in dem Magnesiumrahmen (3) ausgebildet ist, wobei der ausgepresste Abschnitt (11) in der Mitte des planen Bereiches (9) der Stahlplatte (6) ausgebildet ist, der auf der vorstehenden Wulst (9) des Magnesiumrahmens (3) aufliegt, die um den Umfang des Hohlraums (30) herum verläuft.

## Revendications

1. Siège de véhicule à moteur, comprenant un châssis (3) formé d'un alliage de magnésium et une plaque d'acier (6) fixée au châssis de magnésium (3) par des vis (7), rivets ou analogues,
**caractérisé en ce que** le châssis de magnésium (3) et la plaque d'acier (6) sont en contact mutuel pratiquement uniquement dans une région dans laquelle les vis (7) ou analogues sont appliquées, endroit auquel elles ont des surfaces complémentaires arrondies de contact (30, 60), le châssis de magnésium ayant des trous (31) de coopération des vis (7) ou analogues dans lesquels les vis (7) ou analogues sont disposés avec du jeu.

2. Siège selon la revendication 1, **caractérisé en ce que** le châssis est constitué par le châssis (3) du dossier et la plaque (6) est placée sur un côté respectif pour assurer un raccordement articulé sur un châssis d'assise (2).

3. Siège selon la revendication 1, **caractérisé en ce que** le châssis est le châssis d'assise (2) et la plaque (5) est placée d'un côté respectif permettant un raccordement articulé à un châssis de dossier (3).

4. Siège selon la revendication 1, dans lequel chaque vis de fixation (7) est serrée par un écrou coopérant (8), **caractérisé en ce que** la tête (7a) de chaque vis (7) et l'écrou respectif (8) sont supportés contre le châssis de. magnésium (3) et la plaque d'acier (7) avec interposition de plaques (13, 14) de répartition de forces.

5. Siège selon la revendication 1, **caractérisé en ce que** la surface de contact disposée sur le châssis de magnésium (3) est délimitée par une cavité allongée (30) ayant un profil en demi-cercle, qui est entourée par un cordon en saillie (9) dont des nervures de renforcement (10) dépassent radialement, le cordon en saillie (9) et les nervures (10) étant formés en une seule pièce avec le châssis de magnésium (3).

6. Siège selon la revendication 5, **caractérisé en ce que** la surface de contact (60) de la plaque d'acier (6) est délimitée par une partie (11) emboutie vers l'extérieur de la plaque (6) et ayant une forme correspondant à celle de la cavité (30) formée dans le châssis de magnésium (3), la partie emboutie (11) étant formée au centre de la région plate (9) de la plaque d'acier (6) qui est supportée contre le cordon en saillie (9) du châssis de magnésium (3) qui est disposé le long de la périphérie de la cavité (30).
